# EUROPEAN PATENT SPECIFICATION

(11) **EP 1 807 476 B1**
(45) Date of publication and mention of the grant of the patent: **09.05.2012**
(21) Application number: 05786881.2
(22) Date of filing: 27.09.2005
(51) Int. Cl.: C09J 4/00

(54) **SHOCK RESISTANT CYANOACRYLATE COMPOSITIONS**
SCHOCKBESTÄNDIGE CYANOACRYLATMASSEN
COMPOSITIONS DE CYANOACRYLATE RESISTANT AUX CHOCS

(30) Priority: 01.11.2004 US 623906 P; 03.05.2005 US 119703
(43) Date of publication of application: 18.07.2007
(73) Proprietor: Loctite (R & D) Limited, Tallaght, Dublin 24 (IE)
(72) Inventor: MCDONNELL, Patrick F., Terenure, County Dublin (IE); KELLY, Ruth A., Clonee, Dublin 15 (IE); LAMBERT, Robert J., Lucan, County Dublin (IE); TIERNEY, Fergal W., Celbridge, County Kildare (IE)
(74) Representative: Lane, Cathal Michael
(86) International application number: PCT/IE2005/000108
(87) International publication number: WO 2006/048851

(56) References cited:
- US-A- 4 196 271
- US-A- 4 950 701
- PATENT ABSTRACTS OF JAPAN vol. 2000, no. 05, 14 September 2000 (2000-09-14) & JP 2000 053924 A (TOAGOSEI CO LTD), 22 February 2000 (2000-02-22)
- PATENT ABSTRACTS OF JAPAN vol. 007, no. 007 (C-144), 12 January 1983 (1983-01-12) & JP 57 164175 A (NIPPON GOSEI GOMU KK), 8 October 1982 (1982-10-08)
- PATENT ABSTRACTS OF JAPAN vol. 012, no. 202 (C-503), 10 June 1988 (1988-06-10) & JP 63 003072 A (TOAGOSEI CHEM IND CO LTD), 8 January 1988 (1988-01-08)

## Description

### BACKGROUND OF THE INVENTION

### Field of the Invention

This invention relates to cyanoacrylate-containing compositions that exhibit at least one of improved shock resistance and bond strength, while demonstrating relative surface insensitivity with respect to establishing and maintaining fixture times that are on the order of comparable cyanoacrylate compositions without the added carboxylic acids. The compositions include, in addition to the cyanoacrylate component, certain carboxylic acids.

### Brief Description of Related Technology

Cyanoacrylate adhesive compositions are well known, and widely used as quick setting, instant adhesives with a wide variety of uses. See H.V. Coover, D.W. Dreifus and J.T. O'Connor, "Cyanoacrylate Adhesives" in Handbook of Adhesives, 27, 463-77, 1. Skeist, ed., Van Nostrand Reinhold, New York, 3rd ed. (1990). See also G.H. Millet "Cyanoacrylate Adhesives" in Structural Adhesives: Chemistry and Technology, S.R. Hartshorn, ed., Plenun Press, New York, p. 249-307 (1986).

Nonetheless, various techniques have been used to improve further the fixture times of such adhesive compositions for certain applications where it is important to be able to secure one substrate to another quickly, while allowing the bond strength to develop over time. In addition, substrates constructed of certain materials have proven in the past difficult to bond, irrespective of the application to which the adhesive and the substrate are to be placed.

To combat these issues, Henkel Corporation [then Loctite Corporation, at least in part through its Henkel Loctite (Ireland) Ltd. (then Loctite (Ireland) Ltd.) affiliate] developed a technology based on calixarene and oxacalixarene compounds. Generally, the addition of such materials to a cyanoacrylate allow for accelerated fixturing of substrates to-be-bonded together. See U.S. Patent Nos. 4,556,700, 4,622,414, 4,636,539, 4,695,615, 4,718,966, and 4,855,461.

In addition to calixarene compounds, Henkel Corporation also developed technology based on the addition of silacrown compounds to cyanoacrylate adhesive compositions to accelerate fixturing. For instance, U.S. Patent No. 4,906,317 (Liu) is directed to cyanoacrylate adhesive compositions which include silacrown compounds as additives to give substantially reduced fixture and cure times on de-activating substrates such as wood. The silacrown compounds are preferably employed at levels of about 0.1-5% by weight of the composition.

Henkel KGaA developed technology based on the addition to cyanoacrylate compositions of cyclodextrins to accelerate fixturing. In U.S. Patent No. 5,312,864 (Wenz), the acceleration of the setting properties of a cyanoacrylate adhesive composition by adding thereto a hydroxyl group derivative of an α-, β- or γ-cyclodextrin, which is at least partly soluble in the cyanoacrylate, is described.

Other approaches have also been investigated, such as in U.S. Patent No. 4,837,260 (Sato), in which it is reported the use of crown ethers in cyanoacrylate adhesive compositions.

More recently, Loctite (R&D) Ltd. investigated other ways in which to accelerate the curing of cyanoacrylate adhesive compositions. In U.S. Patent No. 6,294,629 (O'Dwyer), a cyanoacrylate adhesive composition is provided with a first accelerator component selected from calixarenes and oxacalixarenes, silacrowns, cyclodextrins, crown ethers, and combinations thereof; and a second accelerator component selected from poly(ethyleneglycol) di(meth)acrylates, ethoxylated hydric compounds, and combinations thereof.

Henkel Corporation further developed a cyanoacrylate adhesive composition, based on a cyanoacrylate component; and an accelerator component consisting essentially of (i) calixarenes, oxcalixarenes, or a combination thereof, and (ii) at least one crown ether, where the composition exhibits a fixturing speed of less than 20 seconds for bonding two substrates, at least one of which is constructed of a material selected from steel, epoxy glass or balsawood, as described in U.S. Patent No. 6,475,331 (O'Connor).

It is known to use certain esters of carboxylic acids as plasticizers to render cyanoacrylate compositions reportedly less likely to bond the users skin. See U.K. Patent No. 2 268 503 (Toa Gosei) and U.S. Patent Application Publication No. 2001/0004655 (Takahashi).

U.S. Patent No. 4,450,265 (Harris) refers to the use of phthallic anhydride in cyanoacrylates for the purpose of improving resistance to moisture and/or heat.

German Patent No. 24 29 070 discloses the use of itaconic anhydride as an additive in alkyl and allyl cyanoacrylate compositions to impart improved heat resistance to the adhesive bonds formed.

U.S. Patent No. 3,832,334 discloses the use of maleic anhydride and derivatives thereof as additives in alkyl cyanoacrylate compositions to impart improved heat resistance to the adhesive bonds formed.

Japanese Patent No. 78 110 635 discloses the use of hydroxyalkyl and hydroxyhaloalkyl esters of α, β-unsaturated carboxylic acids as additives in alkyl cyanoacrylate compositions to impart improved heat resistance to the adhesive bonds formed.

However, the use of acids (not carboxylic acid esters as described above in the preceding paragraph) generally is known to retard the cure (or fixture) speed of cyanoacrylates and therefore their use in such compositions is ordinarily restricted to very small quantities for the sole purpose of stabilization against premature polymerization.

Nevertheless, Japanese Patent No. 77 80 336 discloses the use of dicarboxylic acids and their anhydrides as additives in ethyl cyanoacrylate compositions to impart improved impact resistance to the adhesive bonds formed.

And Japanese Patent No. 77 78 933 discloses the use of aromatic polycarboxylic acids and their anhydrides as additives in ethyl cyanoacrylate compositions to impart improved impact resistance to the adhesive bonds formed.

Despite the existence of the JP '336 patent and the JP '933 patent, neither appears to show improved shock resistance and/or bond strength, while maintaining the level of fixture speeds observed in comparable cyanoacrylate compositions.

Thus, notwithstanding the state-of-the-technology, it would be desirable to provide alternative technologies to improve the shock resistance and/or bond strengths achieved with cyanoacrylate compositions, while not compromising the fixture speed of cyanoacrylates to substrates, and to provide a cyanoacrylate composition with improved shock resistance when cured.

### SUMMARY OF THE INVENTION

The present invention is directed to a cyanoacrylate-based composition, which includes beyond the cyanoacrylate component, an accelerator component and a carboxylic acid selected from those within the following structure: 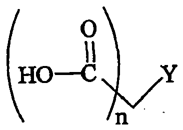 where Y is a direct bond, a methylene unit, an ethylene unit, a propylene unit, an ethenylene unit, or a propenylene unit, or forms part of an aromatic ring structure, with or without hydroxyl functional groups; and n is 2-4.

More particularly, the invention provides a method of improving at least one of the following physical properties: shock resistance or bond strength of a cured cyanoacrylate composition without comprising fixture speed as compared with a cyanoacrylate composition without the carboxylic acid. The method includes the steps of:
providing at least two substrates:
providing a cyanoacrylate-containing composition, which includes beyond the cyanoacrylate component, an accelerator component and the carboxylic acid described in the proceeding paragraph;
applying the cyanoacrylate composition to at least one of the substrates; and
joining the substrates and maintaining them in place for a time sufficient to allow the cyanoacrylate composition to cure.

The carboxylic acid may be selected from one or more of citric acid and its monohydrate, 1,2,4-benzene tricarboxylic acid (or trimellitic acid), hemimellitic acid, trimesic acid, pyromellitic acid, 1,2,3,4-butane tetracarboxylic acid, glutaric acid, 1,2,4,5-benzene tetracarboxylic acid, 1,2,4-benzene tricarboxylic anhydride, 1,2,3-propene tricarboxylic acid (or aconitic acid), 1,2,3-propane tricarboxylic acid (tricarballylic acid), 1,2,3-benzene tricarboxylic acid hydrate and combinations thereof.

The inclusion of one or more of these carboxylic acids intro a cyanoacrylate composition provides for at least one of improved shock resistance and/or bond strength in cured products thereof, while retaining fixture speeds observed in comparable cyanoacrylate compositions without the added acid across a variety of substrates are particularly attractive to assembled end user products in the consumer products markets which are subject to extensive handling and unfortunately dropping.

The discovery of the invention described herein also renders the inventive composition particularly useful in a substrate insensitive manner, without sacrificing shelf life and other desirable properties.

This invention is also directed to a method of bonding together two substrates using the inventive compositions. The method includes applying to at least one of the substrates a composition as described above, and thereafter mating together the substrates.

Also, the invention is directed to a method of preparing the inventive compositions.

The invention will be more fully understood by a reading of the section entitled "Detailed Description of the Invention", which follows.

### BRIEF DESCRIPTION OF THE FIGURES

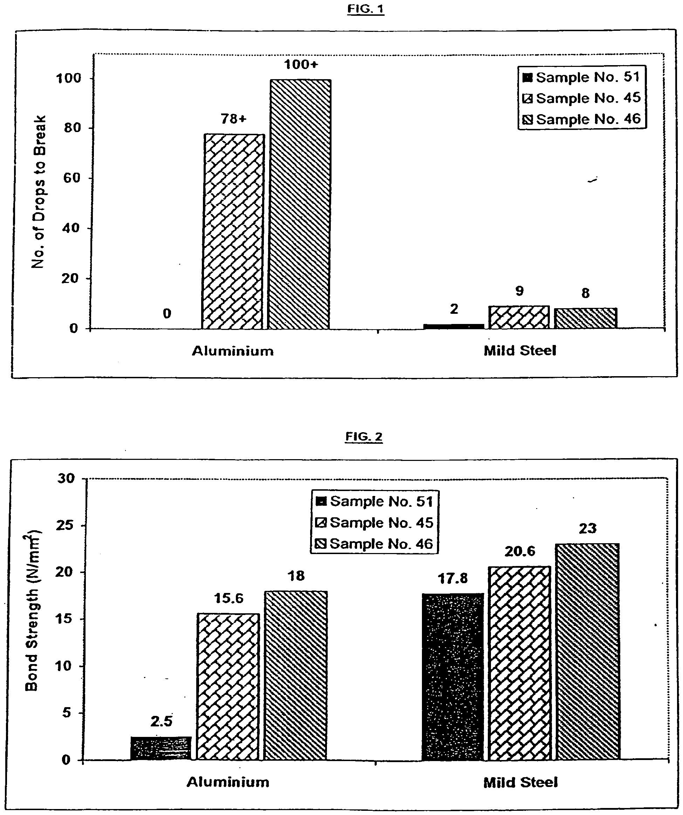

Fig. 1 shows a comparative chart of Sample Nos. 45 and 46 as compared to a control (Sample No. 51) in terms of shock resistance.

Fig. 2 shows a comparative chart of Sample Nos. 45 and 46 as compared to a control (Sample No. 51) in terms of bond strength on aluminum and mild steel substrates.

### DETAILED DESCRIPTION OF THE INVENTION

As noted above, this invention is directed to a cyanoacrylate-based composition, which includes beyond the cyanoacrylate component, a carboxylic acid selected from those within the following structure: 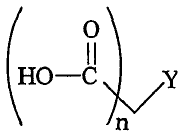 where Y is a direct bond, a methylene unit, an ethylene unit, a propylene unit, an ethenylene unit, or a propenylene unit, or forms part of an aromatic ring structure, with or without hydroxy functional groups; and n is 2-4.

More particularly, the invention provides a method of improving at least one of the following physical properties: shock resistance or bond strength, of a cured cyanoacrylate composition. The method includes the step of providing a cyanoacrylate-based composition, which includes beyond the cyanoacrylate component, an accelerator component and a carboxylic acid as described in the preceding paragraph.

The carboxylic acid may be selected from one or more of citric acid and its monohydrate, 1,2,4-benzene tricarboxylic acid (or trimellitic acid), hemimellitic acid, trimesic acid, pyromellitic acid, 1,2,3,4-butane tetracarboxylic acid, glutaric acid, 1,2,4,5-benzene tetracarboxylic acid, 1,2,4-benzene tricarboxylic anhydride, 1,2,3-propene tricarboxylic acid (or aconitic acid), 1,2,3-propane tricarboxylic acid (tricarballylic acid), 1,2,3-benzene tricarboxylic acid hydrate and combinations thereof.

The carboxylic acid chosen should have an appreciable solubility in the cyanoacrylate selected at room temperature and as such may be used in an amount of 5 ppm to 5000 ppm.

The table below shows the number of acid groups and the respective pKa's.

| **Acid** | **Number of acid groups** | **CAS No.** | **pKa** | | | |
|---|---|---|---|---|---|---|
| | | | **1** | **2** | **3** | **4** |
| 1,2,3,4-Butane tetracarboxylic acid | 4 | 1703-58-8 | 3.25 | 4.51 | 5.02 | 6.54 |
| 1,2,4,5-Benzene tetracarboxylic acid | 4 | 89-05-4 | 1.87 | 2.71 | 4.97 | 5.80 |
| Citric acid | 3 | 77-92-9 | 2.93 | 4.23 | 5.09 | 16.13 |
| Citric acid monohydrate | 3 | 5949-29-1 | 2,93 | 4.23 | 5.09 | 16.13 |
| 1,2,4-Benzene tricarboxylic acid | 3 | 528-44-9 | 2.84 | 3.83 | 5.20 | - |
| 1,2,4-Benzene tricarboxylic anhydride | 3 | 552-30-7 | 3.33 | - | - | - |
| 1,2,3-Propene tricarboxylic acid | 3 | 4023-65-8 | 2.97 | 4.34 | 4.99 | - |
| 1,2,3-Propane tricarboxylic acid | 3 | 99-14-9 | 4.31 | 4.82 | 5.21 | - |
| 1,2,3-Benzene tricarboxylic acid hydrate | 3 | 36362-97-7 | 2.52 | 4.00 | 6.12 | - |
| Pyruvic acid | 1 | 127-17-3 | 2.65 | - | - | - |

The cyanoacrylate component includes cyanoacrylate monomers which may be chosen with a raft of substituents, such as those represented by H₂C=C(CN)-COOR, where R is selected from C₁₋₁₅ alkyl, alkoxyalkyl, cycloalkyl, alkenyl, aralkyl, aryl, allyl and haloalkyl groups. Desirably, the cyanoacrylate monomer is selected from methyl cyanoacrylate, ethyl-2-cyanoacrylate, propyl cyanoacrylates, butyl cyanoacrylates (such as n-butyl-2-cyanoacrylate), octyl cyanoacrylates, allyl cyanoacrylate, ß-methoxyethyl cyanoacrylate and combinations thereof. A particularly desirable one is ethyl-2-cyanoacrylate.

The cyanoacrylate component should be included in the compositions in an amount within the range of from about 50% to about 99.98% by weight, with the range of about 90% to about 99% by weight being desirable, and about 95% by weight of the total composition being particularly desirable.

One or more accelerators may also be included in the composition. Such accelerators may be selected from calixarenes and oxacalixarenes, silacrowns, crown ethers, cyclodextrins, poly(ethyleneglycol) di(meth)acrylates, ethoxylated hydric compounds and combinations thereof.

Of the calixarenes and oxacalixarenes, many are known, and are reported in the patent literature. See e.g. U.S. Patent Nos. 4,556,700, 4,622,414, 4,636,539, 4,695,615, 4,718,966, and 4,855,461, the disclosures of each of which are hereby expressly incorporated herein by reference.

For instance, as regards calixarenes, those within structure **V** are useful herein: 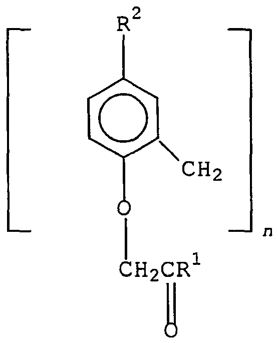 where R¹ is alkyl, alkoxy, substituted alkyl or substituted alkoxy; R² is H or alkyl; and n is 4, 6 or 8.

One particularly desirable calixarene is tetrabutyl tetra[2-ethoxy-2-oxoethoxy]calix-4-arene ("TBTEOCA").

A host of crown ethers are known. For instance, examples which may be used herein either individually or in combination, or in combination with other first accelerators include 15-crown-5, 18-crown-6, dibenzo-18-crown-6, benzo-15-crown-5-dibenzo-24-crown-8, dibenzo-30-crown-10, tribenzo-18-crown-6, asym-dibenzo-22-crown-6, dibenzo-14-crown-4, dicyclohexyl-18-crown-6, dicyclohexyl-24-crown-8, cyclohexyl-12-crown-4, 1,2-decalyl-15-crown-5, 1,2-naphtho-15-crown-5, 3,4,5-naphtyl-16-crown-5, 1,2-methyl-benzo-18-crown-6, 1,2-methylbenzo-5, 6-methylbenzo-18-crown-6, 1,2-t-butyl-18-crown-6, 1,2-vinylbenzo-15-crown-5, 1,2-vinylbenzo-18-crown-6, 1,2-t-butyl-cyclohexyl-18-crown-6, asym-dibenzo-22-crown-6 and 1,2-benzo-1,4-benzo-5-oxygen-20-crown-7. See U.S. Patent No. 4,837,260 (Sato), the disclosure of which is hereby expressly incorporated here by reference.

Of the silacrowns, again many are known, and are reported in the literature. For instance, a typical silacrown may be represented within the following structure (**VI**): 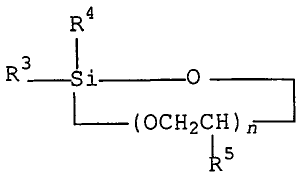 where R³ and R⁴ are organo groups which do not themselves cause polymerization of the cyanoacrylate monomer, R⁵ is H or CH₃ and n is an integer,of between 1 and 4. Examples of suitable R³ and R⁴ groups are R groups, alkoxy groups, such as methoxy, and aryloxy groups, such as phenoxy. The R³ and R⁴ groups may contain halogen or other substituents, an example being trifluoropropyl. However, groups not suitable as R⁴ and R⁵ groups are basic groups, such as amino, substituted amino and alkylamino.

Specific examples of silacrown compounds useful in the inventive compositions include: 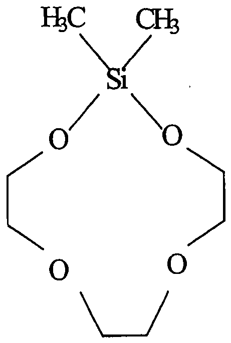 dimethylsila-11-crown-4 (**VII**); 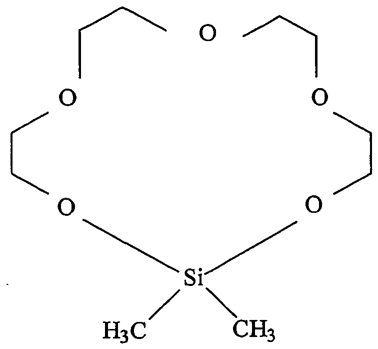 dimethylsila-14-crown-5 (**VIII**); 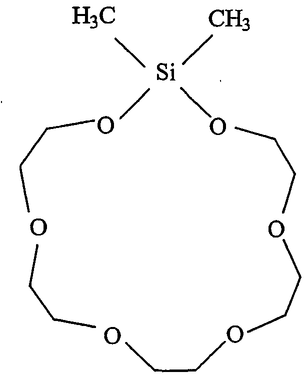 and dimethylsila-17-crown-6 (**IX**). See e.g. U.S. Patent No. 4,906,317 (Liu), the disclosure of which is hereby expressly incorporated herein by reference.

Many cyclodextrins may be used in connection with the present invention. For instance, those described and claimed in U.S. Patent No. 5,312,864 (Wenz), the disclosure of which is hereby expressly incorporated herein by reference, as hydroxyl group derivatives of an α, β or γ-cyclodextrin which is at least partly soluble in the cyanoacrylate would be appropriate choices for use herein as the first accelerator component.

For instance, poly(ethylene glycol) di(meth)acrylates suitable for use herein include there within structure **X** below: 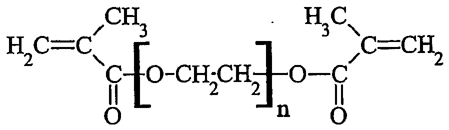 where n is greater than 3, such as within the range of 3 to 12, with n being 9 as particularly desirable. More specific examples include PEG 200 DMA, (where n is about 4) PEG 400 DMA (where n is about 9), PEG 600 DMA (where n is about 14), and PEG 800 DMA (where n is about 19), where the number (e.g., 400) represents the average molecular weight of the glycol portion of the molecule, excluding the two methacrylate groups, expressed as grams/mole (i.e., 400 g/mol). A particularly desirable PEG DMA is PEG 400 DMA.

And of the ethoxylated hydric compounds (or ethoxylated fatty alcohols that may be employed), appropriate ones may be chosen from those within structure **XI**: 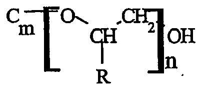 where Cₘ can be a linear or branched alkyl or alkenyl chain, m is an integer between 1 to 30, such as from 5 to 20, n is an integer between 2 to 30, such as from 5 to 15, and R may be H or alkyl, such as C₁₋₆ alkyl.

Commercially available examples of materials within structure **XI** include those offered under the DEHYDOL tradename from Cognis Deutschland GmbH & Co. KG, Dusseldorf, Germany, such as DEHYDOL 100.

In addition, accelerators embraced within structure 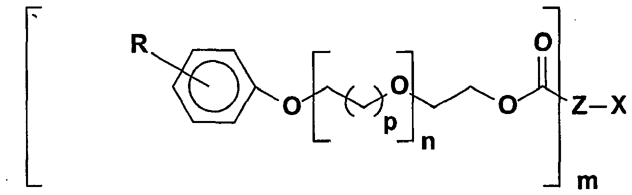 XII, where R is hydrogen, alkyl, alkyloxy, alkyl thioethers, haloalkyl, carboxylic acid and esters thereof, sulfinic, sulfonic and sulfurous acids and esters, phosphinic, phosphonic and phosphorous acids and esters thereof, X is an aliphatic or aromatic hydrocarbyl linkage, which may be substituted by oxygen or sulfur, is a single or double bond and n is 1-12, m is 1-4, and p is 1-3, such as 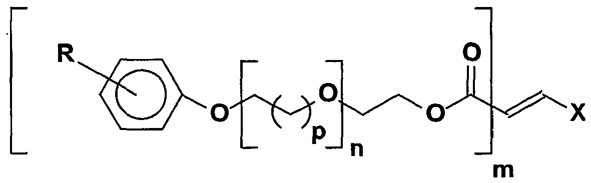 **XIII**, may be used as well.

For instance, a particularly desirable chemical class embraced by these structures is 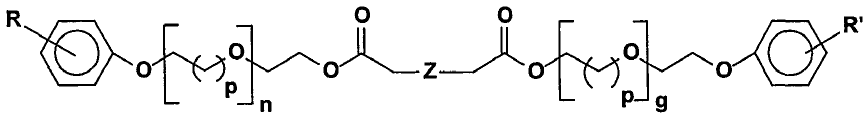 **XIV**, where R, Z, n and p are as defined above, and R' is the same as R, and g is the same as n.

A particularly desirable chemical within this class as an accelerator component is 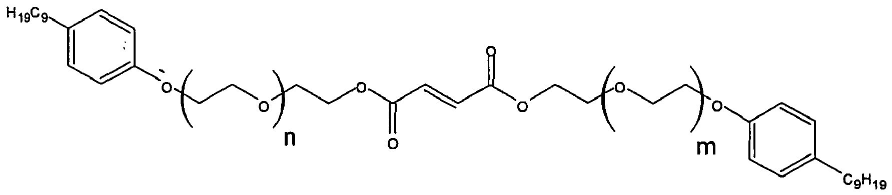 **XV**, where n and m combined are greater than or equal to 12.

The accelerator should be included in the compositions in an amount within the range of from about 0.01% to about 10% by weight, with the range of about 0.1 to about 0.5% by weight being desirable, and about 0.4% by weight of the total composition being particularly desirable.

Additional additives may be included in the inventive compositions to confer additional physical properties, such as improved shelf-life stability, flexibility, thixotropy, increased viscosity, color, improved toughness, and enhanced resistance to thermal degradation. Such additives therefore may be selected from free radical stabilizers, anionic stabilizers, gelling agents, thickeners [such as polymethyl methacrylate ("PMMA")], thixotropy conferring agents (such as fumed silica), dyes, toughening agents, thermal resistance additives, plasticizers and combinations thereof.

In another aspect of the invention, there is provided a method of bonding together two substrates. The method includes applying to at least one of the substrates a cyanoacrylate composition as described above, and thereafter mating together the substrates for a time sufficient to permit the adhesive to fixture. For many applications, the substrates should become fixed in less than 30 seconds, and depending on substrate as little as 1-3 seconds.

In an additional aspect of the invention, there is provided a method of bonding together two substrates. The method includes applying the compositions to at least one of the substrates and mating together the substrates for a time sufficient to permit the composition to fixture.

The inventive compositions may also be used in a two part form, where the carboxylic acid is applied to a surface of one or both substrates as a solution or dispersion in a highly volatile organic solvent, such as acetone or isopropyl alcohol, and thereafter the cyanoacrylate is applied thereover, and the substrates mated.

These aspects of the invention will be further illustrated by the examples which follow.

### EXAMPLES

We prepared in these examples a variety of formulations on a percent by weight basis (unless otherwise noted as ppm) to evaluate their fixture time, bond strength, shelf life and shock resistance on a variety of substrates. The samples were prepared by mixing together the constituents in any order for a sufficient period of time to ensure substantial homogeneity of the constituents. Ordinarily, about 30 minutes suffices, depending of course on the identity and quantity of the constituents used.

### Example 1

The acids listed in Table 1 were added to ethyl cyanoacrylate at a concentration of 0.1% to prepare four different formulations. Another formulation, without any added acid, was included as a control.

The formulations were used to bond lapshear test specimens constructed from either mild steel or aluminum, which were bonded in triplicate. The test specimens had dimensions of 100 x 25 mm and were cleaned/degreased before use. The lapshears were overlapped at their centers to form a cross shaped assembly with an overlap area of 25 mm x 25 mm. The formulations were each applied to one side of one of the lapshears only using the minimum quantity of adhesive to wet the entire area of the overlap. The lapshears were clamped securely and left to cure at room temperature for 48 hours and 168 hours.

The shock resistance of the so-formed bonded lapshear assemblies was determined by dropping the bonded lapshear assemblies from a height of one metre onto a concrete surface, so that the flat part of one of the lapshears made the initial impact with the concrete rather than an edge thereof. The bonded lapshear assemblies were dropped repeatedly until failure was observed to occur through breakage of the bond. Thus, the number of times the bonded assembly was dropped and the bond survived were recorded as a measure of shock resistance.

**Table 1**

| **Sample No.** | **Acid Identity** | **Shock Resistance (No. of Drops)** | | | |
|---|---|---|---|---|---|
| | | **Mild Steel** | | **Aluminum** | |
| | | 48 hours cure | 168 hours cure | 48 hours cure | 168 hours-cure |
| **1*** | Pyruvic acid | 13 | 13 | 50+ | 50+ |
| **2** | 1,2,4-benzene tricarboxylic anhydride | 12 | 17 | 14 | 12 |
| **3** | 1,2,3-propane tricarboxylic acid | 12 | 9 | 50 | 21 |
| **4** | 1,2,4-benzene tricarboxylic acid | 16 | 17 | 17 | 70+ |
| **5** | Control | 1 | 1 | 1 | 1 |

| | | | | | |
|---|---|---|---|---|---|
| * Comparative | | | | | |

As can be seen, the lapshear assembly bonded with the control (without an added acid), broke at its bond line after only one drop irrespective of the material form which the lapshear was constructed, whereas the lapshear assemblies bonded with any of the four formulations prepared with the listed acids showed clear improvement, whether the lapshears were constructed from mild steel or aluminum and whether data was collected after two or seven days of cure.

### Example 2

Ethyl cyanoacrylate was thickened to a viscosity of 100 mPas using polymethylmethacrylate ("PMMA") powder. A calixarene accelerator was added at a concentration of 0.5%. The acids listed in Table 2 were next added at concentrations of 500 ppm and 1000 ppm. The resulting formulations were then used to construct bonded mild steel assemblies which were tested for shock resistance as outlined in Example 1. The cure time before testing here was 24 hours.

**Table 2**

| **Sample No.** | **Acid Identity** | **Shock Resistance (No. of Drops)** | | | |
|---|---|---|---|---|---|
| | | **500 ppm Acid** | | **1000 ppm Acid** | |
| | | Mild Steel | Aluminum | Mild Steel | Aluminum |
| ***6** | Pyruvic acid | 14 | 8 | 13 | 57 |
| **7** | 1,2,4-Benzene tricarboxylic acid | 20 | 30+ | 9 | 75+ |
| **8** | 1,2,4-Benzene tricarboxylic anhydride | 16 | 2 | 12 | 17 |
| **9** | 1,2,3-Propane tricarboxylic acid | 17 | 3 | 12 | 5 |
| **10** | 1,2,3,4-Butane tetracarboxylic acid | 34 | 1 | 27 | 7 |
| **11** | 1,2,3-Propene tricarboxylic acid | 15 | 14 | 7 | 64+ |
| **12** | Control | 1 | 1 | 1 | 1 |

| | | | | | |
|---|---|---|---|---|---|
| * Comparative | | | | | |

As can be seen, the lapshear assembly bonded with the control (without an added acid), broke at its bond line after only one drop irrespective of the material from which the lapshear was constructed, whereas the lapshear assemblies bonded with any of the six formulations prepared with the listed acids showed clear improvement, whether the lapshears were constructed from mild steel or aluminum and whether with 500 ppm or 1000 ppm of the acid, except for 1,2,3,4-butane tetracarboxylic acid where no benefit was observed at the 500 ppm level on aluminum lapshears.

### Example 3

Adhesive formulations were prepared by adding pyruvic acid to (A) unthickened ethyl cyanoacrylate at concentrations of 10, 50, 100, 250 and 1000 ppm and (B) ethyl cyanoacrylate thickened to a viscosity of 100 mPas using PMMA powder and also containing a calixarene accelerator at a level of 0.5%. Similar formulations were prepared by using 1,2,4-benzene tricarboxylic acid at concentrations of 50 and 100 ppm in thickened ethyl cyanoacrylate containing a calixarene accelerator at a level of 0.5%. These formulations are summarized in Table 3. Two control formulations (Sample Nos. 13 and 19) containing no added acid were included in each case. The resulting formulations were then used to construct bonded lapshear assemblies from mild steel, which were evaluated (in triplicate) for shock resistance as outlined in Example 1. The cure time before testing here was 24 hours. Results are shown in Table 3.

**Table 3**

| **Sample No.** | **Adhesive Formulation** | **Shock Resistance (No. of Drops)** | | | |
|---|---|---|---|---|---|
| | | Run 1 | Run 2 | Run 3 | Average |
| **13** | Control (unthickened) | 1 | 1 | 0 | 1 |
| **14** | + 10 ppm Pyruvic acid (unthickened) | 1 | 1 | 0 | 1 |
| **15** | + 50 ppm Pyruvic acid (unthickened) | 1 | 1 | 0 | 1 |
| **16** | + 100 ppm Pyruvic acid (unthickened) | 4 | 4 | 2 | 3 |
| **17** | + 250 ppm Pyruvic acid (unthickened) | 15 | 12 | 10 | 12 |
| **18** | + 1000 ppm Pyruvic acid (unthickened) | 18 | 15 | 8 | 14 |
| **19** | Control (thickened+calixarene) | 1 | 1 | 0 | 1 |
| **20** | + 10 ppm Pyruvic acid (thickened+calixarene) | 12 | 8 | 7 | 9 |
| **21** | + 100 ppm Pyruvic acid (thickened+calixarene) | 11 | 9 | 7 | 9 |
| **22** | + 250 ppm Pyruvic acid (thickened+calixarene) | 22 | 16 | 14 | 17 |
| **23** | + 50 ppm 1,2,4-Benzene tricarboxylic acid (thickened+calixarene) | 18 | 17 | 13 | 16 |
| **24** | + 100 ppm 1,2,4-Benzene tricarboxylic acid (thickened+calixarene) | 34 | 16 | 16 | 22 |
| **25** | + Blend of 50 ppm Pyruvic acid and 50 ppm 1,2,4-Benzene tricarboxylic acid (thickened+calixarene) | 17 | 16 | 16 | 16 |

### Example 4

Two additional formulations were prepared and tested as follows.

Formulation A: PMMA (6%) was dissolved in ethyl cyanoacrylate by heating at a temperature of 65°C for a period of time of 30,minutes with constant stirring, to yield a thickened formulation with a viscosity of 100 mPas. A calixarene accelerator was the added at a level of 0.4%.

Formulation B: PMMA (6%) was dissolved in ethyl cyanoacrylate by heating at a temperature of 65°C for a period of time of 30 minutes with constant stirring, to yield a thickened formulation with a viscosity of 100 mPas. Two accelerators were added: calixarene (0.2%) and polyethyleneglycol 400 dimethacrylate (0.4%) Glycerol triacetate (12% w/w) was also added as a plasticiser.

Citric acid was added to both Formulation A and B at concentrations of 10, 25, 50 and 100 ppm. The resulting formulations were then used to construct bonded lapshear assemblies from each of mild steel and aluminum, which were tested in triplicate for shock resistance as outlined above in Example 1. The cure time before testing here was 72 hours. Results are shown in Table 4.

**Table 4**

| **Sample No.** | **Adhesive Formulation** | **Shock Resistance (No. of Drops)** | | | | | | | |
|---|---|---|---|---|---|---|---|---|---|
| | | **Mild Steel** | | | | **Aluminum** | | | |
| | | **Run 1** | **Run 2** | **Run 3** | **Ave** | **Run 1** | **Run 2** | **Run 3** | **Ave** |
| **26** | Control Formulation A | 1 | 1 | 1 | 1 | 1 | 1 | 1 | 1 |
| **27** | + 10 ppm Citric acid | 10 | 13 | 15 | 13 | 4 | 5 | 7 | 5 |
| **28** | + 25 ppm Citric acid | 8 | 11 | 13 | 11 | 20 | 35 | 50+ | 35+ |
| **29** | + 50 ppm Citric acid | 10 | 10 | 15 | 12 | 50+ | 50+ | 50+ | 50+ |
| **30** | + 100 ppm Citric acid | 14 15 | 15 | 22 | 17 | 50+ | 50+ | 50+ | 50+ |
| **31** | Control Formulation B | 1 | 1 | 1 | 1 | 1 | 1 | 1 | 1 |
| **32** | + 10 ppm Citric acid | 2 | 2 | 6 | 3 | 10 | 3 | 4 | 6 |
| **33** | + 25 ppm Citric acid | 3 | 3 | 4 | 3 | 19 | 25 | 26 | 23 |
| **34** | + 50 ppm Citric acid | 5 | 14 | 17 | 12 | 50+ | 50+ | 50+ | 50+ |
| **35** | + 100 ppm Citric acid | 10 | 10 | 15 | 12 | 50+ | 50+ | 50+ | 50+ |

As can be seen, the lapshear assemblies bonded with either Sample No. 26 or 31 (the control formulations) broke at the bond line after only one drop, whereas the lapshear assemblies bonded with any of the eight formulations prepared with the listed acids (Sample Nos. 27-30 and 32-35) showed improvement, irrespective of whether the lapshears were constructed from mild steel or aluminum.

Increasing the concentration of citric acid in these samples showed an increase in shock resistance in the ranges evaluated.

These samples were also evaluated for tensile shear bond strength on grit-blasted mild steel lapshear specimen assemblies and also on degreased aluminum lapshear specimen assemblies. All the lapshear specimens had dimensions of 100 x 25 mm and the overlap bond area was 25 x 12.5 mm². The assemblies were prepared by applying the formulation to one surface of a lapshear, making the other lapshear therewith, and completing the joint immediately. The assemblies were then stored at room temperature for 48 hours to allow for cure. The tensile shear bond strength was then measured at room temperature using an Instron tensile tester with a crosshead speed of 2 mm/minute.

**Table 5**

| **Sample No.** | **Adhesive Formulation** | **Bond Strength (N/mm²)** | | | | | | | |
|---|---|---|---|---|---|---|---|---|---|
| | | **GB Mild Steel** | | | | **Aluminum** | | | |
| | | **Run 1** | **Run 2** | **Run 3** | **Ave** | **Run 1** | **Run 2** | **Run 3** | **Ave** |
| **26** | Control Formulation A | 20.85 | 21.0 | 20.85 | 20.9 | 1.96 | 3.94 | 3.84 | 3.24 |
| **27** | + 10 ppm Citric acid | 21.69 | 21.56 | 21.59 | 21.6 | 2.45 | 6.03 | 6.16 | 4.88 |
| **28** | + 25 ppm Citric acid | 23.3 | 21.62 | 22.9 | 22.6 | 15.13 | 11.74 | 13.22 | 13.26 |
| **29** | + 50 ppm Citric acid | 24.91 | 25.65 | 24.76 | 25.1 | 16.97 | 18.17 | 21.0 | 18.71 |
| **30** | + 100 ppm Citric acid | 24.79 | 24.29 | 24.38 | 24.5 | 16.64 | 15.17 | 15.15 | 15.66 |
| **31** | Control Formulation B | 15.16 | 16.41 | 16.56 | 16.1 | 3.49 | 4.68 | 4.12 | 4.09 |
| **32** | + 10 ppm Citric acid | 17.37 | 16.93 | 17.86 | 17.4 | 4.85 | 5.14 | 4.86 | 4.95 |
| **33** | + 25 ppm Citric acid | 20.38 | 19.33 | 20.13 | 20.0 | 11.75 | 11.67 | 14.2 | 12.56 |
| **34** | + 50 ppm Citric acid | 20.13 | 23.0 | 23.04 | 22.0 | 14.98 | 16.76 | 16.15 | 15.96 |
| **35** | + 100 ppm Citric acid | 20.67 | 21.17 | 22.58 | 21.5 | 18.8 | 17.96 | 16.95 | 17.9 |

As can be seen, the lapshear assemblies bonded with either Sample No. 26 or 31 (the control formulations) showed lower bond strengths on either of the lapshear assemblies compared with any of the eight formulations prepared with the listed acids (Sample Nos. 27-30 and 32-35).

Whereas certain of the shock resistance measurements did not show a trend of clear improvement, the bond strength evaluation shows a much more consistent set of improved data for the inventive compositions relative to the control formulations.

In addition, while the inclusion of accelerators is seen to decrease the bond strength relative to control formulations, the inclusion of the acid increases the bond strength back to levels observed without the accelerator.

### Example 5

Six formulations (Sample Nos. 36-41) were prepared from ethyl cyanoacrylate, and in each of which citric acid was dissolved at a concentration in the range 30 - 100 ppm. PMMA thickener was added to give viscosities were in the range 50 - 150 mPas. A control formulation without citric acid was also prepared (Sample No. 42).

Shock resistance on steel and aluminum lapshear specimens and bond strengths on aluminum lapshear specimens was determined after 24 hour room temperature cure for each sample as described in previous examples.

Fixture time on ABS plastic lapshear specimens was determined in each case, measured as the cure time in seconds for a bond of area 625 mm² to support a mass of 3 Kg. The fixture time on photocopy paper was determined in a similar manner. While improvements in fixture time may ordinarily be determined by a decrease in the amount of time necessary to achieve bonding, in some cases a slight increase in time actually is considered beneficial, such as where bond alignment (or re-alignment) and repositionability are desirable.

A 20 gram quantity of each sample was placed in a polyethylene bottle, the bottle closed and then aged at a temperature of 82°C to determine a measure of the potential shelf life. The bottles were examined daily and the number of days that the formulation remained flowable (without gelling) was recorded. A commercially acceptable result ordinarily would be between 5 and 10 days.

Results for these evaluations are set forth in Table 6.

**Table 6**

| **Physical Property** | **Sample No.** | | | | | | |
|---|---|---|---|---|---|---|---|
| | **36** | **37** | **38** | **39** | **40** | **41** | **42** |
| Shock Resistance -Steel (No. of Drops) | 11 | 11 | 12 | 9 | 12 | 15 | 1 |
| Shock Resistance - Al (No. of Drops) | 20+ | 20+ | 20+ | 20+ | 20+ | 20+ | 1 |
| Bond Strength - Al (N/mm²) | 14.1 | 13.7 | 14.0 | 9.8 | 11.7 | 14.7 | 2.8 |
| Fixture Time - ABS (seconds) | 3-5 | 3-5 | 3-5 | 1-3 | 3-5 | 3-5 | 1-3 |
| Fixture Time -Photocopy Paper (seconds) | 1-3 | 1-3 | 1-3 | 1-3 | 1-3 | 3-5 | 1-3 |
| Shelf-life at 80°C (Days) | 21+ | 21+ | 21+ | 24+ | 24+ | 24+ | 24+ |
| Citric Acid level (ppm) | 97.6 | 99.0 | 77.3 | 30.0 | 66.2 | 97.7 | 0.00 |

### Example 6

Sample 43-50 based on ethyl cyanoacrylate were prepared with each of the acids listed below in Table 7, all at a concentration of 0.02%, and a calixarene accelerator at a concentration of 0.4%. A control formulation without added acids was included (Sample No. 51).

**Table 7**

| **Sample No.** | **Acid Identity** |
|---|---|
| 43 | 1,2,3,4-Butane tetracarboxylic acid |
| 44 | 1,2,4,5-Benzene tetracarboxylic acid |
| 45 | Citric acid monohydrate |
| 46 | 1,2,4-Benzene tricarboxylic acid |
| 47 | 1,2,4-Benzene tricarboxylic anhydride |
| 48 | 1,2,3-Propene tricarboxylic acid |
| 49 | 1,2,3-Propane tricarboxylic acid |
| 50 | 1,2,3-Benzene tricarboxylic acid hydrate |
| 51 | - |

These samples were used to prepare bonded assemblies of test specimens which were evaluated for physical properties, such as shock resistance (drop test), bond strength and fixture time. The shock resistance was tested on mild steel and aluminum specimens after curing for 24 hours at room temperature, as described in previous examples. The bond strengths (after 24 hour cure at room temperature) were evaluated on grit-blasted mild steel ("GBMS") lapshear specimens and on degreased aluminum lapshear specimens. The fixture times were tested on acrylonitrile butadiene styrene ("ABS") plastic specimens and teak wood specimens. The fixture time is defined as the cure time in seconds for a bond of area 625 mm² to support a mass of 3 Kg.

As above, the accelerated shelf life of each sample was determined in sealed polyethylene bottles containing 20 grams of samples, which were each aged for a period of time of 72 hours at a temperature of 82°C. Viscosities of the samples were measured before and after aging and the percent viscosity change calculated. A percentage change in the range 0%-100% is considered satisfactory and would project to a shelf life of at least 1 year at room temperature.

**Table 8**

| **Sample No.** | **Shock Resistance (No. of Drops)** | | **Bond Strength (N/mm²)** | | **Fixture Time (secs)** | | **Viscosity Increase @ 82°C** |
|---|---|---|---|---|---|---|---|
| | Aluminum | Steel | Aluminum | GBMS | ABS | Teak | |
| 43 | 1 | 8 | 4.0 | 18.6 | 3-5 | 10-12 | 77% |
| 44 | 33 | 10 | 10.0 | 20.0 | 3-5 | 10-12 | Gelled |
| 45 | 78+ | 9 | 15.6 | 20.6 | 3-5 | 12-15 | 39% |
| 46 | 100+ | 8 | 18.0 | 23.0 | 3-5 | 20-25 | 30% |
| 47 | 1 | 8 | 6.4 | 22.0 | 1-3 | 10-12 | 44% |
| 48 | 53 | 9 | 18.2 | 23.0 | 5-7 | 10-12 | 33% |
| 49 | 2 | 8 | 12.0 | 20.4 | 3-5 | 10-12 | 35% |
| 50 | 21 | 7 | 12.3 | 20.4 | 3-5 | 12-15 | 40% |
| 51 | 0 | 2 | 2.5 | 17.8 | 1-3 | 10-12 | 25% |

Thus, as seen from data in Table 8, a cyanoacrylate composition that includes a cyanoacrylate component, an accelerator component, and an acid having two or more acidic groups, when cured demonstrates at least a 3.5 fold improvement in shock resistance when a pair of bonded steel lapshears which have been dropped to the ground from a one metre distance, maintains their fixture speed on acrylonitritle-butadienestyrene copolymer and teak, demonstrates a 37.5 percent increase in bond strength on aluminum, and maintains bond strength on grit blasted mild steel, when compared with a comparable cyanoacrylate composition without the acid.

### Example 7

An ethyl cyanoacrylate gel formulation (Formulation E, Sample No. 52) was prepared from the following components: PMMA (6%), fumed silica (5%), glycerol triacetate (10%) and the accelerators, calixarene (0.2%) and compound **XV** (0.4%). From this formulation, Sample Nos. 53-55 were prepared by the addition of citric acid in concentrations ranging between 50 and 200 ppm.

Formulation F (Sample No. 56) was also prepared from the components of Formulation E, with the exception that fumed silica was omitted. Citric acid, at a level of 50 ppm, was also added to this formulation to create Sample No. 57.

These samples were used to form bonded assemblies and allowed to cure for 24 hours. The shock resistance for each sample was then evaluated, the results for which are reported in Table 9 below. Bonded assemblies were prepared and tested as outlined in Example 1.

**Table 9**

| **Sample No.** | **Adhesive Formulation** | **Shock Resistance (No. of Drops)** | | | | | | | |
|---|---|---|---|---|---|---|---|---|---|
| | | **Mild Steel** | | | | **Aluminum** | | | |
| | | **Run 1** | **Run 2** | **Run 3** | **Ave** | **Run 1** | **Run 2** | **Run 3** | **Ave** |
| 52 | Formulation E | 1 | 1 | 2 | 1.3 | 0 | 0 | 0 | 0 |
| 53 | + 50 ppm Citric Acid | 1 | 1 | 2 | 1.3 | 10 | 15 | 19 | 14.7 |
| 54 | + 100 ppm Citric Acid | 1 | 2 | 4 | 2.3 | 29 | 33 | 36 | 32.7 |
| 55 | + 200 ppm Citric Acid | 2 | 3 | 4 | 3 | 18 | 22 | 24 | 21.3 |
| 56 | Formulation F | 0 | 0 | 0 | 0 | 0 | 0 | 0 | 0 |
| 57 | + 50 ppm Citric acid | 7 | 8 | 9 | 8 | 27 | 31 | 36 | 31.3 |

As the concentration of acid increases in Formulation E (from Sample Nos. 53-55), the shock resistance on mild steel was observed to increase.

The added acid in Formulation F (from Sample No. 57), resulted in the observation of an increase in shock resistance with mild steel lapshears and a considerable increase with aluminum lapshears. Formulation F, without fumed silica, performs in a comparable manner to Formulation E, with fumed silica; however, when citric acid was added to each to form Sample Nos. 57 and 53, respectively, Sample No. 57 is seen to out perform Sample No. 53 in terms of shock resistance.

### Example 8

In this example, seven different hydrophobic, fumed silica samples were evaluated in an ethyl cyanoacrylate. The different silica samples are listed in Table 10 below, together with shock resistance data for cyanoacrylate compositions containing such silica samples on a variety of substrates.

Sample Nos. 58-64 were thus prepared from the following components: ethyl cyanoacrylate, PMMA (6%), the accelerators, calixarene (0.2%) and compound **XV** (0.4%), citric acid (100 ppm) and one of the silica samples A to G (6%).

Table 10 below shows the shock resistance of these samples on lapshears constructed from four different metal substrates, as noted. Bonded lap shear assemblies were prepared and tested according to the method outlined in Example 1. Each result is an average of the number of drops of three assemblies.

**Table 10**

| **Sample No.** | **Silica Sample** | **Surface Coating on Silica** | **SSA (m²/g)** | **Shock Resistance (No. of Drops)** | | | |
|---|---|---|---|---|---|---|---|
| | | | | **Aluminum** | **Mild Steel** | **Brass** | **Stainless Steel** |
| 58 | A | PDMS | 100 | 50+ | 10.7 | 9.7 | 50+ |
| 59 | B | PDMS | 115 | 50+ | 7.7 | 7.3 | 50+ |
| 60 | C | PDMS | 120 | 50+ | 6.5 | 9.3 | 22 |
| 61 | D | PDMS | 170 | 50+ | 3.75 | 6 | 20.7 |
| 62 | E | PDMS | 250 | 50+ | 3 | 5 | 20.3 |
| 63 | F | DMDCS | 110 | 19.3 | 4.7 | 5.7 | 17.3 |
| 64 | G | DMDCS | 125 | 13 | 4.3 | 3.3 | 14.7 |

| | | | | | | | |
|---|---|---|---|---|---|---|---|
| SSA = Surface Specific Area PDMS = Polydimethylsiloxane DMDCS = Dimethyldichlorosilane | | | | | | | |

These results demonstrate that the properties of the fumed silica used in the formulation can affect the shock resistance achieved. As specific surface area increases (within a surface coating type), a decrease in the shock resistance (in terms of drops achieved without breakage) was observed.

Without being bound by theory, this may be explained due to an increase in surface area resulting in an increase in the number of SiOH groups exposed at the surface. The acid additive, in this case citric acid, can interact with these SiOH groups and hence give a decreased effect at the metal surface. As the aluminum surface is more active than that of the other metals evaluated, the effect is not as pronounced within the test parameters in the case of Samples A to E.

Interactions -- which can effect shock resistancemay also take place between silica surface coating and the acid species. This may help to explain the difference in shock resistance performance (again, in terms of numbers of drops achieved) when comparing PDMS and DMDCS surface treatments. However, the same trend of increasing surface area leading to decreasing shock resistance was observed within both surface treatments examined.

As seen, the number of drops achieved decreased as the surface area of the fumed silica increased. Silicas A to E in Table 10 are all surface treated in the same way and show this trend over the range of metals. Silicas F and G are surface treated in the same way as each other (but differently from Samples A to E) and again show this trend.

### Example 9

In this example, an ethyl cyanoacrylate formulation was prepared from the following components: PMMA (6%), fumed silica (6%) and the accelerators, calixarene (0.2%) and PEG 400 DMA (0.4%). This formulation is identified as Sample No. 65 in Table 11.

To this formulation was added 150 ppm or 700 ppm of the various acids listed, to create Sample Nos. 66-75. Table 11 below also reports the shock resistance of these formulations when used to bond mild steel lap shear assemblies and tested according to the method outlined in Example 1.

**Table 11**

| **Sample No.** | **Adhesive Formulation** | **Shock Resistance on Mild Steel (No. of Drops)** | | | | | | | |
|---|---|---|---|---|---|---|---|---|---|
| | | **24 hr Cure** | | | | **72 hr Cure** | | | |
| | | **Run 1** | **Run 2** | **Run 3** | **Ave** | **Run 1** | **Run 2** | **Run 3** | **Ave** |
| 65 | Control Formulation | 1 | 1 | 3 | 1.7 | 0 | 0 | 1 | 0.3 |
| 66 | + 150 ppm Citric Acid | 1 | 2 | 3 | 2 | 2 | 3 | 3 | 2.7 |
| 67 | + 700 ppm Citric Acid | 0 | 1 | 1 | 0.7 | 1 | 4 | 7 | 4 |
| 68 | + 150 ppm Pyruvic Acid | 2 | 3 | 3 | 2.7 | 1 | 2 | 3 | 2 |
| 69 | + 700 ppm Pyruvic Acid | 1 | 1 | 2 | 1.3 | 4 | 4 | 6 | 4.7 |
| 70 | + 150 ppm 1,2,4 Benzene tricarboxylic Acid | 2 | 2 | 4 | 3.7 | 2 | 2 | 5 | 3 |
| 71 | + 700 ppm 1,2,4 Benzene tricarboxylic Acid | 3 | 3 | 4 | 3.3 | 5 | 5 | 6 | 5.3 |
| 72 | + 150 ppm Parabanic Acid | 0 | 1 | 1 | 0.7 | 0 | 0 | 1 | 0.3 |
| 73 | + 700 ppm Parabanic Acid | 0 | 0 | 0 | 0 | 0 | 0 | 0 | 0 |
| 74 | + 150 ppm Transaconitic Acid | 0 | 1 | 2 | 1 | 1 | 1 | 1 | 1 |
| 75 | + 700 ppm Transaconitic Acid | 0 | 0 | 0 | 0 | 2 | 2 | 2 | 2 |

Most of the acids (with the exception of parabanic acid, Sample Nos. 72 and 73), showed improvement in shock resistance over the control formulation (Sample No. 65).

When the assemblies were left to cure for 72 hours instead of 24 hours, the shock resistance in some cases was observed to improve, such as in Sample Nos. 67, 69 and 71.

## Claims

1. A method of improving at least one of shock resistance or bond strength of an assembly comprising at least two substrates bonded together with a cyanoacrylate-containing composition without compromising fixture speed as compared with a cyanoacrylate composition without a carboxylic acid, comprising the steps of:
providing at least two substrates;
providing a cyanoacrylate-containing composition, which includes beyond the cyanoacrylate component, an accelerator component and a carboxylic acid selected from these within the following structure: 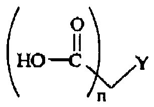 wherein Y is a direct bond, a methylene unit, an ethylene unit, a propylene unit, an ethenylene unit, or a propenylene unit, or forms part of an aromatic ring structure, with or without hydroxyl functional groups; and n is 2-4;
applying the cyanoacrylate composition to at least one of the substrates; and
joining the substrates and maintaining them in place for a time sufficient to allow the cyanoacrylate composition to cure.

2. The method of Claim 1, wherein fixture speed is maintained as compared to a cyanoacrylate composition without the carboxylic acid.

3. The method of Claim 1, wherein the acid is selected from the group consisting of one or more of citric acid and its monohydrate, 1,2,4-benzene tricarboxylic acid, hemimellitic acid, trimesic acid, pyromellitic acid, 1,2,3,4-butane tetracarboxylic acid, glutaric acid, 1,2,4,5-benzene tetracarboxylic acid, 1,2,4-benzene tricarboxylic anhydride, 1,2,3-propene tricarboxylic acid, 1,2,3-propane tricarboxylic acid, 1,2,3-benzene tricarboxylic acid hydrate and combinations thereof.

4. The method of Claim 1, wherein the acid is used in an amount within the range of from 5 ppm to 5000 ppm based on the total composition.

5. The method according to Claim 1, wherein the cyanoacrylate component is selected from materials within the structure H₂C=C(CN)-COOR, wherein R is selected from C₁₋₁₅ alkyl, alkoxyalkyl, cycloalkyl, alkenyl, aralkyl, aryl, allyl and haloalkyl groups.

6. The method according to Claim 1, wherein the cyanoacrylate component comprises ethyl-2-cyanoacrylate.

7. The method according to Claim 1, wherein the accelerator component is selected from the group consisting of calixarenes, oxacalixarenes, silacrowns, cyclodextrins, crown ethers, poly(ethyleneglycol)di(meth)acrylates, ethoxylated hydric compounds, an accelerator represented by the following chemical structure 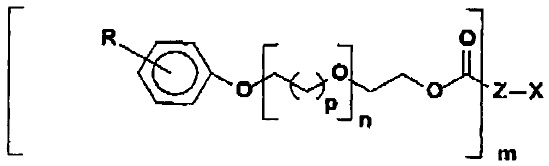 wherein R is hydrogen, alkyl, alkyloxy, alkyl thioethers, haloalkyl, carboxylic acid and esters thereof, sulfinic, sulfonic and sulfurous acids and esters, phosphinic, phosphonic and phosphorous acids and esters thereof, X is an aliphatic or aromatic hydrocarbyl linkage, which may be substituted by oxygen or sulfur, Z is a single or double bond, n is 1-12, m is 1-4, and p is 1-3, and combinations thereof.

8. The method according to claim 1, wherein the accelerator component is used in an amount within the range of from about 0.01% by weight to about 5% by weight based on the total composition.

9. The method according to claim 1, further comprising additives selected from the group consisting of free radical stabilizers, anionic stabilizers, plasticizers, thixotropy conferring agents, thickeners, dyes, toughening agents, thermal degradation reducers, and combinations thereof.

10. A method of bonding together two substrates comprising the steps of:
applying a cyanoacrylate-containing composition according to claim 1, to at least one of the substrates and mating together the substrates for a time sufficient to permit the adhesive to fixture.

11. The method according to claim 10, wherein at least one of the substrates is constructed of metal.

12. A cyanoacrylate composition comprising:
a cyanoacrylate component;
an accelerator component, and
a carboxylic acid selected from those within the following structure: 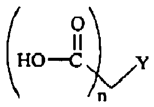
wherein Y is a direct bond, a methylene unit, an ethylene unit, a propylene unit, an ethenylene unit, or a propenylene unit, or forms part of an aromatic ring structure, with or without hydroxyl functional groups; and n is 2-4.

## Patentansprüche

1. Ein Verfahren zur Verbesserung von wenigstens der Schockfestigkeit oder der Bindungsfestigkeit eines Verbunds aus wenigstens zwei Substraten, welche mit einer Cyanoacrylat enthaltenden Zusammensetzung miteinander verbunden sind, ohne dass die Fixierschnelligkeit dadurch beeinträchtigt wird, verglichen mit einer Cyanoacrylatzusammensetzung ohne eine Carbonsäure, umfassend die Schritte:
Bereitstellen von wenigstens zwei Substraten,
Bereitstellen einer Cyanoacrylat enthaltenden Zusammensetzung, die neben der Cyanoacrylatkomponente eine Beschleunigerkomponente und eine Carbonsäure, ausgewählt aus denjenigen der folgenden Struktur: 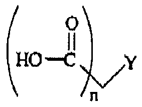 wobei Y eine direkte Bindung, eine Methyleneinheit, eine Ethyleneinheit, eine Propyleneinheit, eine Ethenyleneinheit oder eine Propenyleneinheit ist oder einen Teil einer aromatischen Ringstruktur bildet, mit oder ohne hydroxyfunktionellen Gruppen, und n 2-4 ist, enthält,
Auftragen der Cyanoacrylatzusammensetzung auf wenigstens eines der Substrate und
Zusammenfügen der Substrate und Halten der Substrate in Position für eine ausreichende Zeit, damit die Cyanoacrylatzusammensetzung aushärten kann.

2. Das Verfahren nach Anspruch 1, wobei die Fixierschnelligkeit erhalten bleibt, verglichen mit einer Cyanoacrylatzusammensetzung ohne die Carbonsäure.

3. Das Verfahren nach Anspruch 1, wobei die Säure ausgewählt ist aus der Gruppe, bestehend aus einem oder mehreren von: Citronensäure und ihr Monohydrat, 1,2,4-Benzoltricarbonsäure, Hemimellitsäure, Trimesinsäure, Pyromellitsäure, 1,2,3,4-Butantetracarbonsäure, Glutarsäure, 1,2,4,5-Benzoltetracarbonsäure, 1,2,4-Benzoltricarbonsäureanhydrid, 1,2,3-Propentricarbonsäure, 1,2,3-Propantricarbonsäure, 1,2,3-Benzoltricarbonsäurehydrat und Kombinationen davon.

4. Das Verfahren nach Anspruch 1, wobei die Säure in einer Menge innerhalb des Bereichs von 5 ppm bis 5000 ppm, bezogen auf die Gesamtzusammensetzung, eingesetzt wird.

5. Das Verfahren gemäß Anspruch 1, wobei die Cyanoacrylatkomponente ausgewählt ist aus Materialien mit der Struktur H₂C=C(CN)-COOR, wobei R ausgewählt ist aus C₁₋₁₅ Alkyl-, Alkoxyalkyl-, Cycloalkyl-, Alkenyl-, Aralkyl-, Aryl-, Allyl- und Halogenalkylgruppen.

6. Das Verfahren gemäß Anspruch 1, wobei die Cyanoacrylatkomponente Ethyl-2-cyanoacrylat umfasst.

7. Das Verfahren gemäß Anspruch 1, wobei die Beschleunigerkomponente ausgewählt ist aus der Gruppe, bestehend aus Calixarenen, Oxacalixarenen, Silakronen, Cyclodextrinen, Kronenethem, Poly(ethylenglycol)di(meth)acrylaten, ethoxylierten hydrischen Verbindungen, einem Beschleuniger, der durch die folgende chemische Struktur dargestellt wird 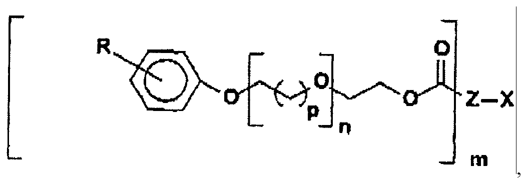 wobei R Wasserstoff, Alkyl, Alkyloxy, Alkylthioether, Halogenalkyl, Carbonsäure und Ester davon, Sulfin-, Sulfon- und Schwefelsäuren und Ester davon, Phosphin-, Phosphon- und Phosphorsäuren und Ester davon ist, X eine aliphatische oder aromatische Hydrocarbylverknüpfung, die durch Sauerstoff oder Schwefel substituiert sein kann, ist, Z eine Einfach- oder Doppelbindung ist, n 1-12 ist, m 1-4 ist und p 1-3 ist, und Kombinationen davon.

8. Das Verfahren gemäß Anspruch 1, wobei die Beschleunigerkomponente in einer Menge innerhalb des Bereichs von etwa 0,01 Gew.-% bis etwa 5 Gew.-%, bezogen auf die Gesamtzusammensetzung, eingesetzt wird.

9. Das Verfahren gemäß Anspruch 1, ferner umfassend Additive, ausgewählt aus der Gruppe, bestehend aus Radikalstabilisatoren, anionischen Stabilisatoren, Plastifizierungsmitteln, Thixotropiermitteln, Verdickungsmitteln, Farbstoffen, Schlagzähigkeitsverbesserern, Mitteln zur Verringerung der thermischen Zersetzung und Kombinationen davon.

10. Ein Verfahren zum Verbinden zweier Substrate, umfassend die Schritte:
Auftragen einer Cyanoacrylat enthaltenden Zusammensetzung gemäß Anspruch 1 auf wenigstens eines der Substrate und Zusammenfügen der Substrate für eine ausreichende Zeit, damit der Klebstoff fixieren kann.

11. Das Verfahren gemäß Anspruch 10, wobei wenigstens eines der Substrate aus Metall hergestellt ist.

12. Eine Cyanoacrylatzusammensetzung, umfassend:
eine Cyanoacrylatkomponente,
eine Beschleunigerkomponente und
eine Carbonsäure, ausgewählt aus denjenigen der folgenden Struktur: 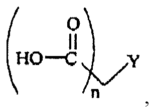
wobei Y eine direkte Bindung, eine Methyleneinheit, eine Ethyleneinheit, eine Propyleneinheit, eine Ethenyleneinheit oder eine Propenyleneinheit ist oder einen Teil einer aromatischen Ringstruktur bildet, mit oder ohne hydroxyfunktionellen Gruppen, und n 2-4 ist.

## Revendications

1. Procédé d'amélioration d'au moins une propriété parmi la résistance au choc ou la résistance d'adhésion d'un ensemble comprenant au moins deux substrats liés ensemble par une composition contenant du cyanoacrylate et sans compromettre la vitesse de prise en comparaison avec une composition de cyanoacrylate sans acide carboxylique, comprenant les étapes consistant à :
fournir au moins deux substrats ;
fournir une composition contenant du cyanoacrylate et qui comprend, en plus du composant cyanoacrylate, un composant accélérateur et un acide carboxylique sélectionné parmi ceux présentant la structure suivante : 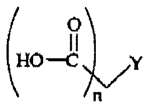
dans laquelle Y est une liaison directe, un motif méthylène, un motif éthylène, un motif propylène, un motif éthénylène ou un motif propénylène, ou forme une partie d'une structure cyclique aromatique, avec ou sans groupe fonctionnel hydroxyle ; et n est compris entre 2 et 4 ;
appliquer la composition de cyanoacrylate sur au moins l'un des substrats ; et
réunir les substrats et les maintenir en place pendant une durée suffisante pour permettre à la composition de cyanoacrylate de durcir.

2. Procédé selon la revendication 1, dans lequel la vitesse de prise est conservée en comparaison avec une composition de cyanoacrylate sans l'acide carboxylique.

3. Procédé selon la revendication 1, dans lequel l'acide est sélectionné dans le groupe composé d'un ou de plusieurs éléments parmi l'acide citrique et son monohydrate, l'acide 1,2,4-benzène-tricarboxylique, l'acide hémimellitique, l'acide trimésique, l'acide pyromellitique, l'acide 1,2,3,4-butane-tétracarboxylique, l'acide glutarique, l'acide 1,2,4,5-benzène-tétracarboxylique, l'anhydride 1,2,4-benzène-tricarboxylique, l'acide 1,2,3-propène-tricarboxylique, l'acide 1,2,3-propane-tricarboxylique, l'acide 1,2,3-benzènetricarboxylique hydraté et leurs combinaisons.

4. Procédé selon la revendication 1, dans lequel l'acide est utilisé dans une quantité comprise dans la plage de 5 ppm à 5000 ppm, sur la base de la composition totale.

5. Procédé selon la revendication 1, dans lequel le composant cyanoacrylate est sélectionné parmi des matériaux ayant la structure H₂C=C(CN)-COOR, où R est sélectionné parmi un groupe alkyle en C₁₋₁₅, alcoxyalkyle, cycloalkyle, alcényle, aralkyle, aryle, allyle et haloalkyle.

6. Procédé selon la revendication 1, dans lequel le composant cyanoacrylate comprend de l'éthyl-2-cyanoacrylate.

7. Procédé selon la revendication 1, dans lequel le composant accélérateur est sélectionné dans le groupe composé des calixarènes, des oxacalixarènes, des sila-couronnes, des cyclodextrines, des éther-couronnes, des poly(éthylèneglycol)-di(méth)acrylates, des composés hydriques éthoxylés, d'un accélérateur représenté par la structure chimique suivante 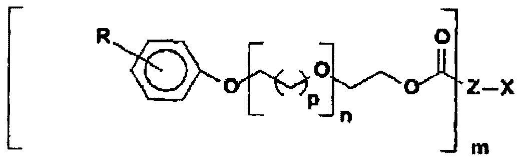 dans laquelle R est un hydrogène, un groupe alkyle, alkyloxy, alkylthioéther, haloalkyle, acide carboxylique et ses esters, acides et esters sulfinique, sulfonique et sulfureux, acides et esters phosphinique, phosphonique et phosphoreux de ceux-ci, X est une liaison hydrocarbyle aliphatique ou aromatique, qui peut être substituée par un oxygène ou un soufre, Z est une liaison simple ou double, n est compris entre 1 et 12, m est compris entre 1 et 4, et p est compris entre 1 et 3, et leurs combinaisons.

8. Procédé selon la revendication 1, dans lequel le composant accélérateur est utilisé dans une quantité comprise dans la plage d'environ 0,01 % en poids à environ 5 % en poids, sur la base de la composition totale.

9. Procédé selon la revendication 1, comprenant en outre des additifs sélectionnés dans le groupe composé de stabilisants de radicaux libres, de stabilisants anioniques, de plastifiants, d'agents conférant une thixotropie, d'épaississants, de colorants, d'agents de trempe, de réducteurs de la dégradation thermique et de combinaisons de ceux-ci.

10. Procédé de liaison de deux substrats, comprenant les étapes consistant à :
appliquer une composition contenant du cyanoacrylate selon la revendication 1 sur au moins l'un des substrats et assembler les deux substrats pendant une durée suffisante pour permettre à l'adhésif de prendre.

11. Procédé selon la revendication 10, dans lequel au moins l'un des substrats est constitué de métal.

12. Composition de cyanoacrylate, comprenant :
un composant cyanoacrylate ;
un composant accélérateur ; et
un acide carboxylique sélectionné parmi ceux ayant la structure suivante : 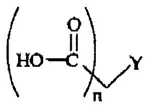
dans laquelle Y est une liaison directe, un motif méthylène, un motif éthylène, un motif propylène, un motif éthénylène ou un motif propénylène, ou forme une partie d'une structure cyclique aromatique, avec ou sans groupe fonctionnel hydroxyle ; et n est compris entre 2 et 4.
